# FASCICULE DE BREVET EUROPEEN

(11) **EP 0 426 580 B1**
(45) Date de publication et mention de la délivrance du brevet: **18.01.1995**
(21) Numéro de dépôt: 90420465.8
(22) Date de dépôt: 29.10.1990
(51) Int. Cl.: B65D 83/14

(54) **Procédé de fabrication d'une tête de distributeur, tête et distributeur correspondants**
Verfahren zur Herstellung eines Sprühkopfes entsprechende Sprühkopf und Spender
Process for producing a dispenser head, corresponding head and dispenser

(30) Priorité: 02.11.1989 FR 8914731
(43) Date de publication de la demande: 08.05.1991
(73) Titulaire: CEBAL S.A., F-92115 Clichy (FR)
(72) Inventeur: Rebeyrolle, Michel, F-51800 Sainte Menehould (FR); Schneider, Bernard, F-51800 Sainte Menehould (FR)
(74) Mandataire: Mougeot, Jean-Claude

(56) Documents cités:
- EP-A- 0 251 863
- EP-A- 0 341 170
- EP-A- 0 354 137
- EP-A- 0 385 896
- FR-A- 2 606 686
- US-A- 2 957 611
- US-A- 3 343 730
- US-A- 4 773 553

## Description

La présente invention concerne un procédé de fabrication d'une tête à fixer sur l'extrémité supérieure du corps rigide d'un boîtier de façon à former un distributeur du type aérosol ou un distributeur à pompe, le volume intérieur de ce distributeur n'étant pas cloisonné. L'invention concerne aussi la tête obtenue et un distributeur comprenant cette tête.

Comme l'indique le document FR-A-2606686, on connaît déjà un corps de boitier métallique faisant partie d'un distributeur à propulseur du type aérosol, ce corps étant réalisé en une seule pièce par filage par choc à partir d'une pastille d'aluminium ou alliage, puis par formage de l'extrémité supérieure ouverte de son corps cylindrique en une partie rétreinte ou dôme habituellement surmontée d'un bord roulé. Ce corps de boîtier sera ensuite rempli de produit liquide ou crémeux, et la valve de distribution sera fixée à son sommet par sertissage de la coupelle de fixation de cette valve autour du bord roulé précédent. Dans cette réalisation, le rétreint de ladite extrémité supérieure fait en plusieurs passes est compliqué.

Il existe par ailleurs des boîtiers dont le corps en fer blanc est cylindrique, le fond étant serti, et la coupelle de fixation de la valve étant elle-même sertie à l'extrémité supérieure du corps après le remplissage du produit. Ces sertissages métal/métal entraînent malgré les revêtements des risques de corrosion.

On connaît en outre, par le document EP-A-251 863, un tube souple en matière plastique surmoulé par un bourrelet sur une collerette d'un corps de pompe. Le bourrelet rigide étant raccordé directement à une jupe souple, la liaison décrite est fragile.

La demanderesse a cherché à mettre au point un distributeur comprenant un corps de boîtier facile à fabriquer et ne donnant pas de tels risques de corrosion pour le distributeur assemblé.

### EXPOSE DE L'INVENTION

L'invention a pour premier objet un procédé de fabrication d'une tête de distributeur consistant en un dôme annulaire rigide en metière plastique surmonté d'une valve pour aérosol ou d'une pompe de distribution d'un produit liquide ou crémeux, ladite valve ou ladite pompe étant équipée d'un rebord annulaire de fixation dont le pourtour est au moins extérieurement en matière plastique, et ledit dôme portant à son extrémité inférieure un moyen annulaire de fixation sur l'extrémité du corps rigide d'un boîtier, dans lequel :
a) on dispose ladite valve ou ladite pompe entre des outillages constitués par un outillage inférieur central et un outillage supérieur central, comportant respectivement un creux central surmonté d'un bord périphérique supérieur et un creux central avec une surface périphérique d'appui située au droit du bord périphérique supérieur, lesdits bord et surface serrant entre eux de façon étanche ledit rebord annulaire et contenant ladite valve ou ladite pompe avec des jeux limitant son échauffement pendant le moulage ;
b) on dispose autour des outillages précédents des outillages annulaires définissant avec les outillages précédents un intervalle annulaire comprenant au moins de haut en bas une portion élargie intérieurement qui se referme de façon étanche sur ledit rebord annulaire de fixation de ladite valve ou pompe, l'extrémité du rebord annulaire étant comprise dans l'intervalle annulaire sur une distance radiale d'au moins 0,8 mm, puis une portion de diamètre croissant suivie d'au moins un espace annulaire d'extrémité inférieure obturée par un outillage annulaire inférieur, ledit intervalle annulaire comportant au moins un orifice d'injection de matière plastique ;
c) on injecte de la matière plastique fondue par le ou lesdits orifices d'injection dans ledit intervalle annulaire, on laisse refroidir et on démoule la tête de distributeur obtenue.

La tête préassemblée obtenue supprime tout risque de corrosion lié à son assemblage avec un corps de boîtier métallique, métallo-plastique ou en matière plastique. Elle permet un remplissage de produit, habituellement liquide ou crémeux, ce qui est un grand avantage, le remplissage pouvant être écourté notamment par l'utilisation de plusieurs écoulements simultanés. Comme on le verra par quelques exemples, l'assemblage étanche de la tête avec l'extrémité supérieure du corps de boîtier est fait par collage, par soudage ou par verrouillage plastique, toutes méthodes fiables et n'entraînant pas de risque de corrosion tels que ceux des assemblages métal/métal.

Les outillages supérieurs recouvrent le haut de l'intervalle annulaire à l'exception d'un ou plusieurs points d'injection, chaque point d'injection de diamètre faible, typiquement 0,5 à 1 mm, se trouvant au fond d'un puits ou creux dans lequel on introduit habituellement, pour le moulage par injection de matière plastique dans ledit intervalle annulaire, une busette de coulée chauffante ("a hot runner system").

Selon la géométrie de la liaison moulée à réaliser, on peut avoir soit un seul orifice d'injection, soit davantage et typiquement de 2 à 5 orifices d'injection simultanée de la matière plastique. Les conditions d'injection sont choisies pour réaliser cette liaison moulée en 0,6 à 3 secondes d'injection, le temps de refroidissement avant déplacement des outillages pour démouler étant de préférence au moins 3 fois le temps d'injection.

On a constaté que, pour préserver la qualité de la valve ou de la pompe pendant le présent moulage, il était important de ménager des jeux bien placés autour de cette valve ou pompe pendant le moulage. C'est la partie de la valve ou pompe qui craint le plus les échauffements, et on a également à réaliser une disposition précise du rebord annulaire de la valve ou pompe. La disposition suivante a été mise au point: les outillages contenant la valve ou pompe comprennent un outillage inférieur qui est surmonté d'un bord périphérique supérieur sur lequel s'appuie ledit rebord annulaire de ladite valve ou pompe lorsque celle-ci est disposée dans ledit creux, ledit rebord annulaire dépassant alors d'au moins 0,8 mm dudit bord périphérique supérieur, et ledit creux ayant à sa partie supérieure et sur au moins 5 mm de hauteur un jeu diamétral d'au moins 0,2 mm par rapport à ladite valve ou pompe et de préférence en-dessous une portion de centrage d'au moins 3 mm de hauteur et de jeu diamétral maximal 0,2 mm par rapport à cette valve ou pompe.

Par ailleurs, pour minimiser encore l'échauffement interne de la pompe, il est souhaitable que l'outillage central supérieur coiffe la partie supérieure de la valve ou pompe avec un jeu latéral d'au moins 0,3 mm au diamètre.

De façon générale, les dimensions des divers outillages sont ajustées pour que leur serrage avant injection de la matière plastique produise un serrage étanche du rebord annulaire de la valve ou pompe entre les surface et bord périphériques d'appui de l'outillage central supérieur et de l'outillage inférieur. Le rebord annulaire de ladite valve ou pompe doit de préférence dépasser dudit bord périphérique supérieur de l'outillage inférieur de 1 à 3 mm.

En ce qui concerne la qualité de la liaison entre le dôme et le rebord annulaire de la valve ou la pompe résultant du moulage par injection, on a constaté que, lorsque les matières plastiques du dôme et dudit rebord annnulaire sont de même nature, cette liaison est une soudure. La largeur du rebord annulaire comprise dans cette soudure ne peut être déterminée que par la connaissance du type de pompe présent. Lorsque les matières plastiques du dôme et du rebord annulaire sont différentes, la liaison obtenue apparaît comme un collage à adhérence intime, sans refusion, et on a vérifié que cette liaison donnait néanmoins une bonne étanchéité. Pour améliorer la résistance mécanique et la fiabilité de cette extrémité, il est alors conseillé de munir le rebord annulaire dans sa partie comprise par le moulage d'une petite nervure annulaire, par exemple de 0,4 x 0,4 mm, située par exemple sur son bord d'extrémité ou sur une face de ce rebord près de cette extrémité. Et il est préférable, pour la solidité de la liaison obtenue, que le bourrelet intérieur du dôme enserre ledit rebord annulaire sur 1 à 3 mm de large.

L'invention a encore pour objet une tête de distributeur à fixer sur le corps tubulaire rigide d'un boîtier, obtenable par le procédé qui vient d'être décrit tel que spécifié dans la revendication 7. Cette tête consiste en un dôme annulaire moulé autour du rebord annulaire de fixation étanche d'une valve ou pompe, ledit dôme étant monobloc et comprenant uniquement les portions suivantes en allant du haut vers le bas:
- une portion supérieure annulaire comprenant un bourrelet intérieur qui enserre ledit rebord annulaire, en le pinçant sur au moins 0,8 mm de large par suite du moulage ;
- puis une portion en forme de voile annulaire de diamètre croissant vers le bas, d'épaisseur comprise entre 1,2 et 4 mm;
- puis une portion inférieure annulaire de fixation sur ledit corps de boîtier, prolongeant ledit voile et comportant un moyen annulaire de fixation sur l'extrémité supérieure dudit corps tubulaire du boîtier.

Surtout dans le cas d'une pompe mais aussi dans le cas d'une valve, la portion supérieure annulaire du dôme peut être prolongée vers le haut par une couronne longitudinale, de façon à jouer un rôle de protection des moyens de distribution.

Le moyen annulaire de fixation du dôme et donc de la tête sur le corps du boîtier consiste soit en une gorge annulaire de profil en partie au moins semi-circulaire permettant d'emboîter le bord roulé du boîtier, soit en une jupe ayant une surface intérieure annulaire typiquement verticale permettant d'emboîter l'extrémité supérieure rétreinte typiquement droite du corps de boîtier.

Le dôme, c'est-à-dire tout le moulage annulaire dont une partie enserre le rebord annulaire de la valve ou pompe, est en l'une des matières plastiques du groupe formé par: les polyamides, les polycarbonates, les polyesters, le polyacétal, le polypropylène et le polyéthylène. Selon le choix de matière plastique fait, le dôme de la tête de l'invention pourra avoir un poids et une épaisseur minimale assez fortement variable, l'épaisseur de son voile annulaire se situant typiquement entre 1,5 et 3 mm. La réalisation par moulage de la tête permet d'obtenir un voile dissymétrique, ce qui permet d'avoir alors une distribution de direction oblique ou latérale.

L'invention a pour troisième objet un distributeur comportant une tête préassemblée selon l'invention et un corps de boîtier, cette tête étant fixée par son moyen annulaire de fixation sur l'extrémité supérieure du corps de boîtier.
Parmi ces méthodes de fixation, celles qui sont le plus adaptées à un travail en série chez un conditionneur relèvent des principes suivants: collage; soudage d'une pièce de liaison; réalisation d'un verrou en matière plastique à l'intérieur du bord roulé surmontant le corps tubulaire, par exemple par soudage par rotation (= par friction) d'une pièce en matière plastique emprisonnée par ledit bord roulé; et soudage par friction sur l'extrémité supérieure du corps de boîtier dans le cas d'un corps de boîtier en matière plastique.
Ces diverses méthodes et les dispositions qui en résultent seront illustrées par les exemples.

Dans le cas fréquent d'un corps de boîtier métallique, celui-ci est typiquement en aluminium ou alliage ou en fer blanc, l'un comme l'autre pouvant être revêtu de matière plastique et/ou de vernis et il s'agit cypiquement soit d'un corps de boîtier à fond métallique monobloc filé ou embouti ou embouti-étiré, soit d'un corps de boîtier à fond métallique serti étanche.

Avec ce type de structure, l'extrémité supérieure du corps de boîtier peut avoir un rétreint faible, qu'il s'agisse d'un rétreint droit ou d'un rétreint surmonté d'un bord roulé extérieur. Le dôme annulaire de la tête joue en effet un rôle d'adaptateur de diamètre. Pour tous les cas qui précèdent et typiquement dans le cas d'un boîtier métallique en Al ou alliage d'Al, le rétreint de l'extrémité supérieure du corps tubulaire correspond typiquement à une différence entre diamètre hors-tout du corps et diamètre intérieur de son ouverture supérieure réduite, allant de 4 mm à au plus 12 mm, et l'épaisseur de la paroi latérale est réduite comme déjà indiquée, correspondant comme suit au diamètre extérieur de cette paroi, les épaisseurs entre parenthèses concernant un corps tubulaire filé de l'art antérieur:
. ⌀ 33 mm à < 47 mm : épaisseur 0,15 à 0,20 mm (0,30 à 0,35 mm)
. ⌀ 47 mm à < 55 mm épaisseur 0,20 à 0,25 mm (0,35 à 0,4 mm)
. ⌀ 55 mm à 80 mm : épaisseur 0,25 à 0,35 mm (0,4 à 0,6 mm)
Ces valeurs de rétreint et d'épaisseur sont également valables pour les corps de boîtiers en fer blanc utilisés selon l'invention. Le faible rétreint du corps de boîtier et l'économie de métal qui lui est associé sont des avantages industriels très importants.

### AVANTAGES DE L'INVENTION

Les avantages de l'invention sont résumés ci-après:
- suppression des risques de corrosion importantes à l'endroit des fixations étanches du distributeur incorporant une telle tête préassemblée, des contacts matière plastique/métal étant alors seuls possibles;
- facilité du remplissage du corps de boîtier;
- facilité de l'assemblage tête/corps de boîtier, plusieurs méthodes étant disponibles;
- fabrication étonnamment plus facile du corps de boîtier en métal, la formation d'un dôme étant inutile et le rétreint étant plus faible;
- de ce fait, forte réduction de l'épaisseur de la paroi latérale du corps de boîtier, typiquement de 35 à 50% relatif;
- facilité du moulage de la tête préassemblée (dôme + valve ou pompe), l'utilisation de cette tête entraînant les avantages ci-dessus.

### Exemples

Les figures 1 à 3 représentent chacune une tête de distributeur selon l'invention en position de moulage, en demi-coupe axiale, la pompe comprise dans la tête n'étant toutefois pas coupée.

La figure 4 représente une tête résultant du moulage de la figure 3.

La figure 5 représente une tête résultant du moulage de la figure 1.

La figure 6 représente un distributeur pour aérosol, en coupe axiale.

La figure 7 représente un distributeur à pompe sans retour d'air, en coupe axiale.

La figure 8 représente un distributeur à pompe muni d'un piston glissant, en coupe axiale, son piston glissant surmonté du produit remplissant le distributeur étant figuré dans la demi-vue de droite.

Les figures 9 à 12 représentent divers modes d'assemblages des dômes d'une tête selon l'invention et d'un corps de boîtier, en vue partielle selon une demi-coupe axiale.

### 1. Premier exemple du procédé de moulage de l'invention

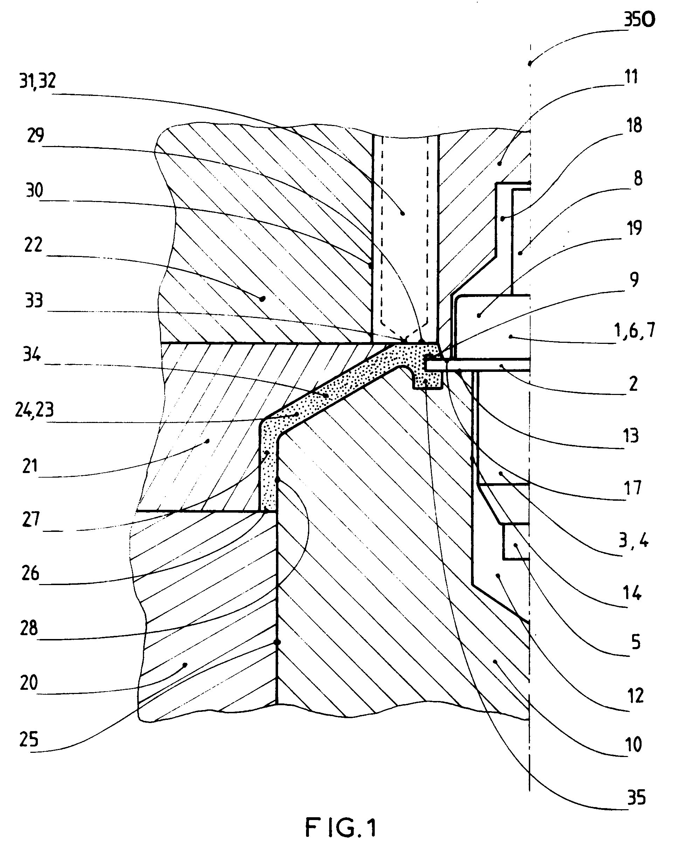

La pompe 1 de la figure 1 est sans retour d'air du type VP3 des Etablissements VALOIS (FR), elle est chemisée de polypropylène et son rebord annulaire de fixation 2, situé sensiblement à mi-hauteur de son corps, a un diamètre extérieur de 17,5 mm et une épaisseur de 1 mm, avec sur sa face supérieure près de son bord d'extrémité une nervure périphérique de section droite 0,4 x 0,4 mm.
Sa partie inférieure 3, contenant le mécanisme de la pompe, comporte en-dessous du rebord annulaire 2 une portion 4 de hauteur 17 mm et de diamètre 8 mm et une tubulure 5 d'entrée de produit.
Il faut éviter de chauffer la portion 4 au-dessus de 70°C, et si possible ne pas dépasser 50°C. La partie supérieure 6, contenant le haut du mécanisme et une tige creuse ou tige de sortie d'actionnement et d'éjection du produit, comporte une portion 7 de hauteur 8 mm et de diamètre 11 à 11,5 mm. et une tige de sortie 8 de diamètre 3 mm.

Les outillages centraux 10 et 11 contiennent la pompe 1 avec du jeu en enserrant de façon étanche son rebord annulaire 2. L'outillage central inférieur 10 comporte un creux central 12 surmonté d'un bord périphérique supérieur 13, et la partie inférieure 3 de la pompe 1 loge dans ce creux 12, son rebord annulaire 2 s'appuyant sur ledit bord périphérique supérieur 13.

Le rebord annulaire 2 dépasse de 1,2 mm du bord périphérique supérieur 13 de largeur 3,15 mm. Le creux central 12 a à sa partie supérieure 14 un diamètre de 8,8 mm sur une hauteur de 18 mm et une profondeur totale de 23 mm. Dans cette partie supérieure 14, on a un jeu de 0,4 mm au diamètre par rapport à la portion sensible 4 de la pompe 1.

L'outillage central supérieur 11 s'appuie sur le rebord annulaire 2 par une surface périphérique 17 de largeur 1,1 mm située au droit du bord supérieur d'appui 13, produisant ainsi l'enserrement étanche du rebord annulaire 2, qui dépasse de la surface d'appui 17 de 1,2 mm au rayon, c'est-à-dire de la largeur déjà libre sur sa face inférieure.
Le creux central 18 de l'outillage supérieur 11 comporte, en-dehors de cet appui 17 sur le rebord 2, du jeu tout autour de la partie supérieure de la pompe 1. En particulier, ce creux 18 comporte au-dessus de l'appui 17 une première partie cylindrique de diamètre 13,5 mm et de hauteur 8,5 mm ayant un jeu de 0,6 mm au diamètre par rapport à la portion 19 de la pompe 1 située immédiatement au-dessus de son rebord annulaire 2.

Il y a trois outillages annulaires superposés 20,21 et 22, définissant avec les outillages centraux 10 et 11 et le rebord annulaire 2 de la pompe 1, sur lequel ces outillages centraux 10 et 11 se referment, un intervalle annulaire 23 dont la représentation sur les figures signifie aussi bien l'intervalle 23 que la matière plastique qui va y être injectée et constituer un dôme annulaire 24 moulé autour de la pompe 1 ou d'une valve. L'outillage annulaire inférieur 20 comporte une surface intérieure verticale 25 coulissant par rapport à l'extérieur de l'outillage central inférieur 10 et délimite l'extrémité inférieure 26 de l'intervalle annulaire 23, cette extrémité 26 devenant après moulage l'extrémité de la jupe de fixation 27 à surface intérieure verticale 28 du dôme annulaire 24.

L'outillage annulaire intermédiaire 21 forme l'extérieur de l'intervalle annulaire 23, l'écartement entre cet outillage annulaire 21 et l'outillage central inférieur 10 réglant les largeurs de cet intervalle 23 et donc les épaisseurs du dôme annulaire 24. L'outillage annulaire 22, entourant de façon jointive l'outillage central supérieur 11, ferme l'extrémité supérieure 29 de l'intervalle annulaire 23, et contient sur son pourtour un ou plusieurs creux 30 dans lequel on encastre une ou plusieurs busettes de coulée 31 avec leur système chauffant 32 et leur orifice d'injection 33 se plaçant au droit de l'extrémité supérieure 29 de l'intervalle annulaire 23.

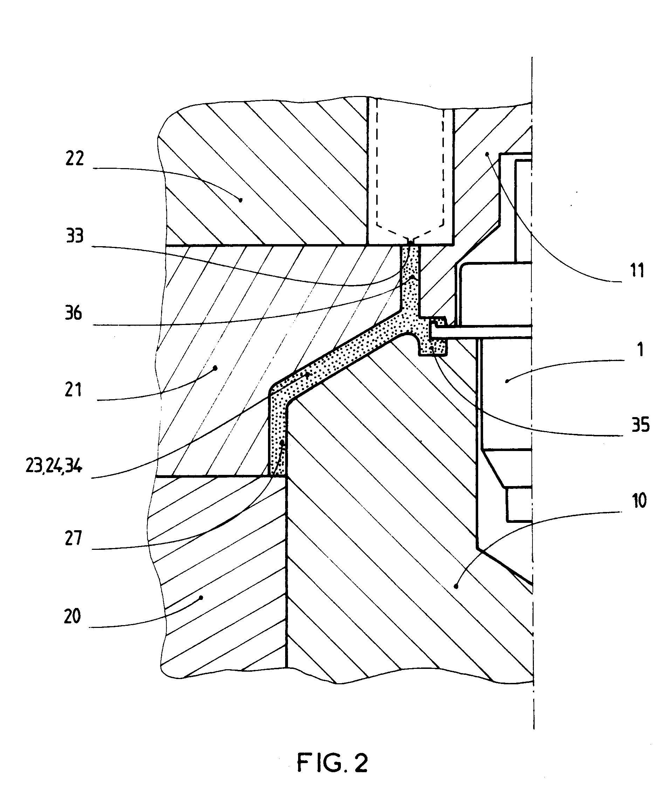

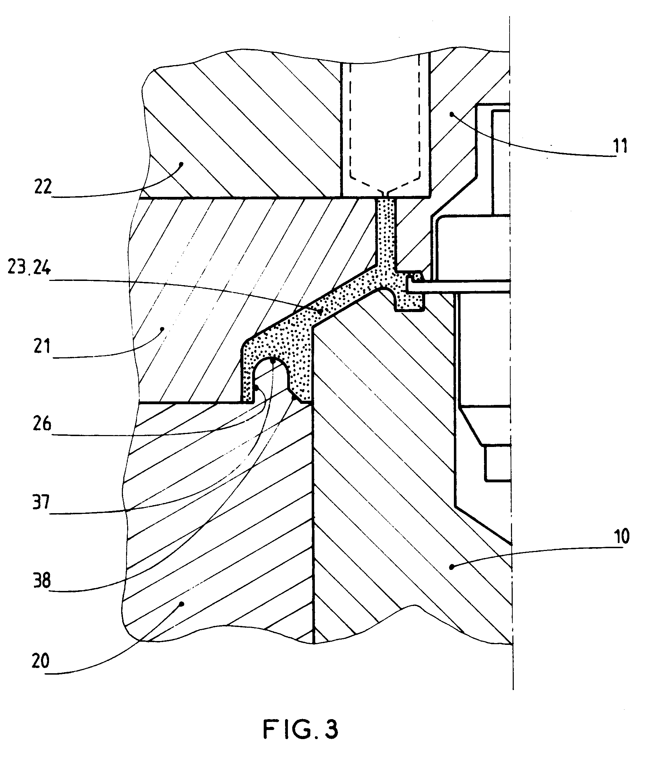

Dans le cas présent comme dans celui des figures 2 et 3, le moulage est possible avec un seul point d'injection 33, mais pour avoir un dôme annulaire 24 bien régulier en fabrication de série on préfère utiliser 3 points d'injection régulièrement espacés.

L'intervalle annulaire 23 donnant le dôme annulaire 24 a un diamètre extérieur de 44 mm, tandis que le rebord annulaire 2 a un diamètre extérieur de 17,5 mmm, et l'épaisseur de la portion tronconique 34 de l'intervalle formant le voile 34 du dôme 24 est de 2,3 mm. Ce dôme 24 est en polyéthylène haute densité (PE.HD).

Les portions des outillages centraux 10 et 11 qui enserrent le rebord annulaire 2 de la pompe 1 définissent avec l'outillage annulaire supérieur 22 un creux annulaire 35 formant un bourrelet 35 d'épaisseur 4 mm qui enveloppe assez largement l'extrémité de ce rebord 2, contribuant à la solidité et à l'étanchéité de la jonction réalisée. Le refroidissement habituel des outillages par l'extérieur ne suffit pas en lui-même pour obtenir une limitation suffisante de l'échauffement de la pompe, cette limitation est obtenue grâce à la conception des outillages et aux jeux imposés dans l'invention.
Pour le moulage, on dispose la pompe 1 entre les outillages centraux 10 et 11, puis on empile les outillages annulaires 20 à 22 autour de ces outillages centraux en centrant l'outillage intermédiaire 21 par rapport à l'axe de symétrie 350 de façon à obtenir un intervalle annulaire 23 de mêmes largeurs sur toute sa périphérie. On place ensuite les trois busettes de coulée 31 dans leurs logements 30 et on les alimente à partir d'une même réserve de PE-HD fondu sous pression entre 260 et 290°C, réalisant l'injection simultanée de cette matière plastique par les trois orifices d'injection tels que 33 dans l'intervalle annulaire 23 et le remplissage de cet intervalle 23. L'injection dure environ 3 secondes, on relève les busettes de coulée 31 et on laisse refroidir pendant 12 secondes avant de démouler par déplacement relatif des outillges.

### 2/ Autres exemples du procédé de moulage de l'invention

L'organisation et les fonctions essentielles des outillages 10,11, 20 à 22 sont les mêmes dans le cas des figures 2 et 3 que dans le cas de la figure 1.
Dans le cas de la figure 2, la hauteur de l'intervalle annulaire 23 est augmentée par l'adjonction d'une portion annulaire verticale 36 au-dessus du creux enveloppant 35, cette portion 36 devenant après moulage une couronne 36 qui protège encore mieux des chocs la liasion dôme/rebord annulaire 2. L'outillage annulaire intermédiaire 21 est épaissi de la même façon, et les orifices d'injection 33 sont à mi-épaisseur de l'extrémité supérieure de la position 36.

Dans le cas de la figure 3, on a par rapport à la figure 2 un changement du moyen de fixation de l'extrémité inférieure du dôme 24 sur un corps de boîtier.
L'extrémité inférieure 26 de l'intervalle annulaire est en creux, définissant après moulage un profil annulaire ayant en section axiale un fond hémi-circulaire 37 et des surfaces d'entrée droites, la surface d'entrée intérieure 38 étant chanfreinée de façon à faciliter l'emboîtage du bord roulé d'un récipient. Cette extrémité inférieure en creux 26 est formée comme les extrémités inférieures des figures 1 et 2 par l'outillage annulaire inférieur 20.

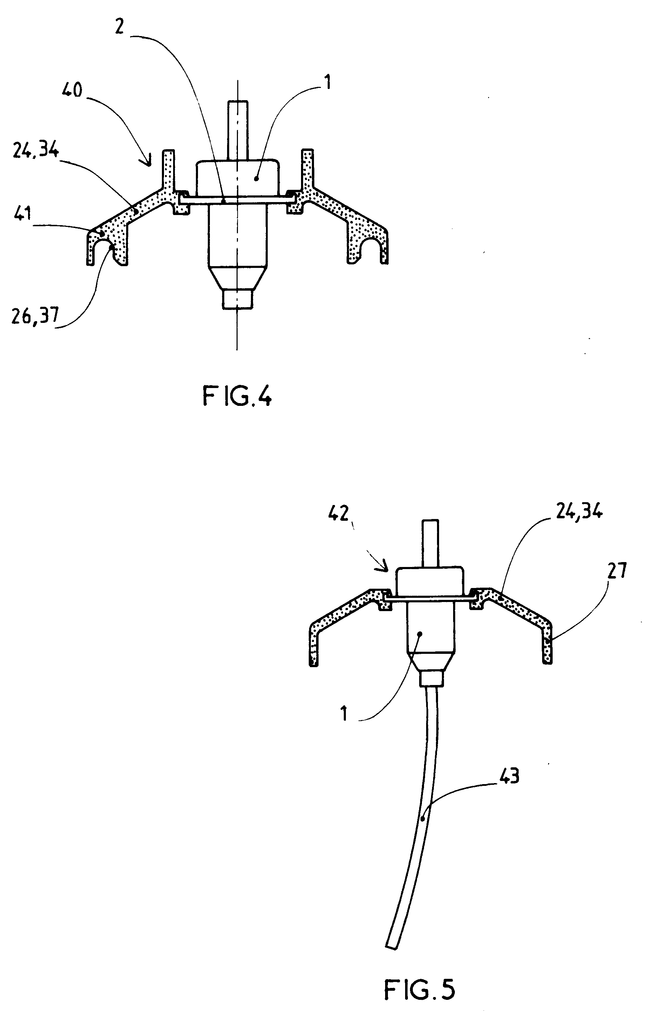

### 3/ Exemples de têtes de distributeur obtenus par le procédé de l'invention (figures 4 et 5)

La tête 40 de la figure 4 est représentée en simple coupe axiale de son dôme 24, la pompe 1 et son rebord annulaire 2 n'étant pas coupés. Cette tête 40 est obtenue avec la disposition de moulage de la figure 3. Le dôme annulaire 24 est en PE.HD, son voile tronconique 34 d'épaisseur 2,3 mm est suivi d'une portion inférieure circulaire élargie 41 de diamètre extérieur 45 mm et de diamètre intérieur 39 mm, son extrémité inférieure 26 en gorge ouverte comportant un profil hémi-circulaire 37 de rayon 1,5 mm en section axiale et de diamètre moyen 42 mm. Cette tête 40 peut être fixée facilement sur le bord roulé d'un récipient par collage.
Les essais de collage sur cette configuration ont montré qu'il fallait d'abord faire une oxydation de surface de la gorge circulaire 37 (traitement corona ou à la flamme), et ensuite utiliser de préférence une colle au cyanoacrylate.

La tête 42 de la figure 5 est représentée de même et comporte également une pompe sans retour d'air type VP3 des Etablissements VALOIS (FR), chemisé de polypropylène, le dôme 24 surmoulé étant aussi en polypropylène (PP). Cette tête 42 est obtenue par la disposition de moulage de la figure 1.
Ce dôme 24 dont le voile 34 a une épaisseur 2,3 mm comporte une jupe verticale de fixation 27 cylindrique circulaire de diamètres extérieur 45 mm et intérieur 41 mm, pouvant emboîter le rétreint d'un corps de boîtier et lui être fixé par une méthode appropriée telle que un collage ou un soudage par friction.
La pompe 1 est équipée d'un tube plongeur 43, cette tête 42 devant être fixée sur un corps de boîtier à fond étanche pour la distribution d'un liquide qui y sera contenu.

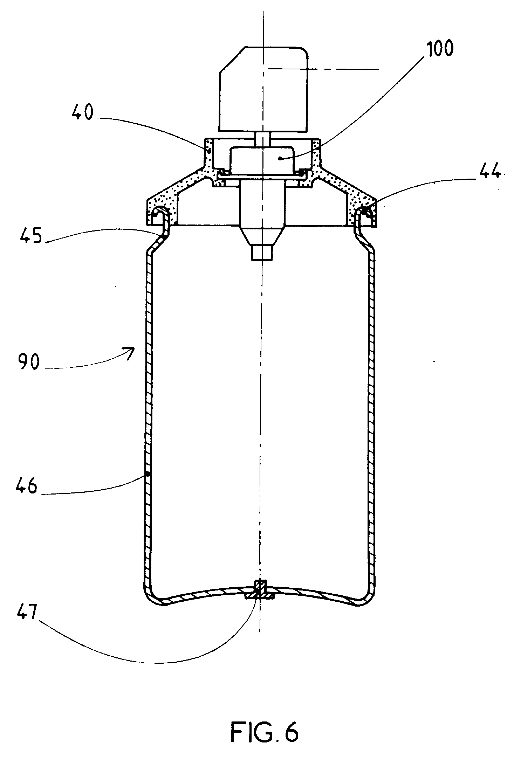

### 4/ Exemples de distributeurs comprenant une tête selon l'invention (figures 6 à 8).

La figure 6 représente un distributeur d'aérosol 90 comprenant une tête 40 selon la figure 4 fixée par collage de sa gorge annulaire de fixation 37 sur le bord roulé 44 terminant le léger rétreint d'extrémité supérieure 45 d'un corps de boîtier 46 en alliage d'aluminium embouti-étiré, la pompe 1 étant ici remplacée par une valve 100 et le fond du corps de boîtier 46 étant pourvu d'un orifice et d'un bouchon 47 pour une application aérosol.

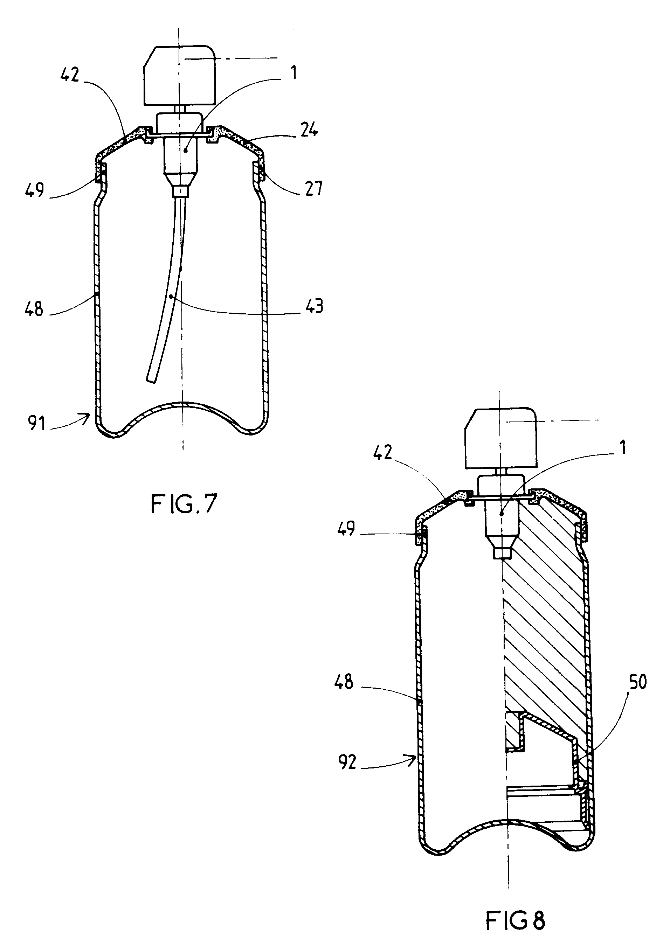

La figure 7 représente un distributeur 91 de liquide ou de crème comprenant une tête 42 de la figure 5 fixée sur un corps de boîtier 48 en alliage d'aluminium à fond monobloc étanche, obtenu par emboutissage-étirage comme celui 46 de la figure 6.
La jupe de fixation 27 du dôme 24 de la tête 42 est collée avec une colle au cyanoacrylate au rétreint droit 49 de l'extrémité supérieure du corps de boîtier 48.

Pour obtenir une distribution satisfaisante du liquide ou de la crème qui est contenue dans le distributeur 91, la tubulure d'entrée de la pompe 1 est munie d'un tube plongeur 43 descendant jusque vers le fond du corps de boîtier 48, le plein initial du produit contenu étant limité à 70% du volume intérieur.
En effet, des essais ont montré que, avec des pleins de 80% et plus, les pompes sans retour d'air utilisées ne fonctionnent pas de façon satisfaisante, et que avec des pleins de 70%, le fonctionnement était toujours satisfaisant. Ces essais permettent de conclure qu'un maximum de remplissage de 75% doit être respecté dans le champ d'application de la présente invention (capacités typiquement inférieures à 1 litre) pour obtenir des distributions sans incident, les remplissages préférés étant de 60 à 75%.

La figure 8 représente un distributeur 92 de liquide ou de crème comprenant également une tête 42 de la figure 5, cette fois-ci sans tube plongeur et fixée sur un corps de boîtier 48, dans lequel le piston glissant 50 est introduit avant confection du rétreint droit 49.
La distribution par pompage fait monter le piston 50, celui-ci assurant la régularité de cette distribution.

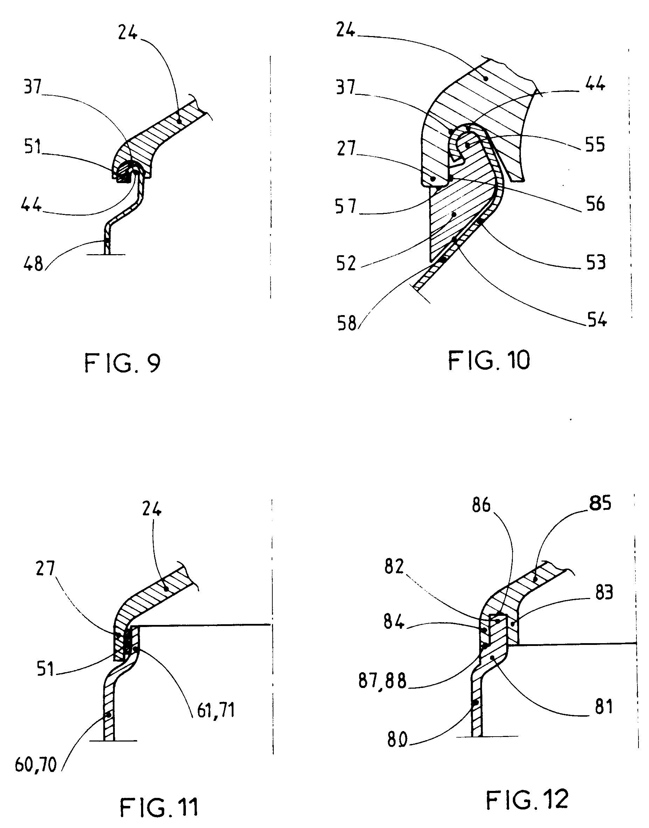

### 5/ Méthodes d'assemblage de la tête préassemblée de l'invention et d'un corps de boîtier (figures 9 à 12).

Le dôme annulaire 24 peut être collé sur un bord d'extrémité roulé ou renflé, ou bien à une extrémité rétreinte de divers types de corps de boîtier, en métal, en matière plastique, en verre ou en céramique.
Certaines méthodes particulières et certains cas particuliers méritent d'être signalés et donnés en exemple.

.La figure 9 représente la fixation d'un dôme 24 sur un corps de boîtier 48 à l'aide d'une pièce annulaire de laision 51 compatible à la fois avec la matière plastique du dôme 24- ici du PE.HD- et le métal du corps de boîtier 48 - ici de l'aluminium faiblement allié -. Cette pièce 51 d'épaisseur 0,2 mm est en complexe contenant la même polyoléfine que celle du dôme 24, c'est-à-dire du PE, et de l'EAA; son bord extérieur est encliqueté sur l'extrémité du bord roulé 44, et après la mise en place du dôme 24 venant s'appliquer par sa gorge circulaire 37 sur la pièce de liaison 51, le soudage est effectué par l'une des méthodes suivantes: par induction haute fréquence, par rotation, ou encore par ultrasons en modifiant la forme du dôme pour l'appui du transducteur ultrasonore.

. Le mode de fixation de la figure 10 utilise une pièce annulaire de forme 52 en matière plastique de même nature que celle du dôme 24, dont le haut n'est pas représenté, cette pièce 52 étant mise en place sur l'épaule ou portion rétreinte 53 du corps de boîtier située avant le roulage de son bord d'extrémité. Cette pièce 52, ici en PE comme le dôme 24, comporte une base 54 s'appuyant sur cette épaule 53 du corps de boîtier, une portion supérieure 55 qui va être sertie comme représenté par le roulage 44 du bord d'extrémité supérieure du corps de boîtier 48, ainsi que une ou plusieurs surfaces, ici les deux surfaces verticales 56 et horizontale 57, venant au contact de la jupe extérieure 27 du dôme 24. Les mises en place de la pièce de forme 52, du bord roulé 44 et du dôme 24 étant faites, la fixation étanche est effectuée par soudage par rotation des portées annulaires 56 et 57 contre la portion annulaire 27 du dôme 24. La fixation peut aussi être faite en soudage par induction HF ou par ultrasons.

Le corps de boîtier 60 de la figure 11 est en matière plastique, ici du PE.HD d'épaisseur 0,6 mm dans sa partie cylindrique. Ce corps de boîtier moulé 60 présente une extrémité supérieure cylindrique 61 de diamètre extérieur réduit 40 mm tandis que le dôme 24 comporte à son extrémité inférieure une jupe droite 27 dont la surface intérieure cylindrique de diamètre 39,8 mm vient emboîter avec serrage l'extrémité 61. La fixation est alors faite en soudage par rotation (soudage par friction).
En variante, la fixation est faite par collage, la jupe droite 27 ayant un diamètre de 40,2 mm et l'extrémité 61 comportant de préférence de légères dépressions de rétention de la colle reliées entre elles par des creux formant des ponts et de profondeur typique 0,03 à 0,08 mm.
La même structure est utilisée pour la fixation d'un dôme en matière plastique 24 sur l'extrémité rétreinte 71 d'un boîtier métallique 70 **(éléments représentés par la même** figure 11). Un anneau de liaison 51 de même nature que celui de la figure 9 est alors placé autour de l'extrémité 71 et le soudage est effectué typiquement par induction HF ou par rotation. Le diamètre intérieur de la jupe 27 du dôme 24 et l'épaisseur de l'anneau ou bracelet 51 sont choisis de façon à réaliser un léger serrage avant soudage.
Un collage est également possible, l'intérieur de la jupe en matière plastique 27 étant oxydé superficiellement au préalable et l'extérieur du corps de boîtier 70 étant de préférence verni.

La figure 12 représente un boîtier moulé 80 en PE.HD d'épaisseur 0,6 mm dans sa partie cylindrique. Ce boîtier moulé présente à son extrémité supérieure 81 une tubulure 82 de section axiale rectangulaire qui vient s'emboîter avec serrage entre la jupe intérieure 83 et la jupe extérieure 84 du dôme 85, la tubulure 82 s'appliquant par son extrémité horizontale contre le fond de la rainure 86. La fixation est faite de préférence en soudage par rotation, elle peut aussi être réalisée par collage. La surface annulaire horizontale 87 et l'extrémité 88 de la jupe extérieure 84 du dôme 85 peuvent également intervenir dans cette fixation. Dans le cas du soudage par rotation, la friction est favorisée par cette disposition, entraînant une bonne reproductibilité des résultats et de l'étanchéité obtenue.

### Applications

La tête préassemblée de l'invention a une grande variété d'applications dans le conditionnement de produits liquides et crémeux dans des distributeurs d'aérosols ou à pompe, permettant des durées de conservations accrues.

## Revendications

1. Procédé de fabrication d'une tête de distributeur (40,42) consistant en un dôme annulaire rigide (24) en matière plastique surmonté d'une valve pour aérosol (100) ou d'une pompe (1) de distribution d'un produit liquide ou crémeux, ladite valve (100) ou ladite pompe (1) étant équipée d'un rebord annulaire de fixation (2) dont le pourtour est au moins extérieurement en matière plastique, et ledit dôme (24) portant à son extrémité inférieure (26) un moyen annulaire de fixation (27,37) sur l'extrémité (44,49,61,71,81) d'un corps rigide de boîtier (46,48,60,70,80), dans lequel :
a) on dispose ladite valve (100) ou ladite pompe (1) entre des outillages (10,11) constitués par un outillage inférieur central (10) et un outillage supérieur central (11), comportant respectivement un creux central (12) surmonté d'un bord périphérique supérieur (13) et un creux central (18) avec une surface périphérique d'appui (17) située au droit du bord périphérique supérieur (13), lesdits bord (13) et surface (17) serrant entre eux de façon étanche ledit rebord annulaire (2) et contenant ladite valve (100) ou ladite pompe (1) avec des jeux limitant son échauffement pendant le moulage ;
b) on dispose autour des outillages précédents (10 et 11) des outillages annulaires (20,21,22) définissant avec les outillages précédents (10,11) un intervalle annulaire (23) comprenant au moins de haut en bas une portion élargie intérieurement (35) qui se referme de façon étanche sur ledit rebord annulaire (2) de fixation de ladite valve (100) ou pompe (1), l'extrémité du rebord annulaire (2) étant comprise dans l'intervalle annulaire (23) sur une distance radiale d'au moins 0,8 mm, puis une portion de diamètre croissant (34) suivie d'au moins un espace annulaire d'extrémité inférieure (26) obturée par un outillage annulaire inférieur (20), ledit intervalle annulaire (23) comportant au moins un orifice d'injection de matière plastique (33) ;
c) on injecte de la matière plastique fondue par le ou lesdits orifices d'injection (33) dans ledit intervalle annulaire (23), on laisse refroidir et on démoule la tête de distributeur (40,42) obtenue.

2. Procédé selon la revendication 1, dans lequel lesdits orifices d'injection (33) sont au nombre de 2 à 5 et dans lequel on injecte ladite matière plastique simultanément par lesdits orifices.

3. Procédé selon l'une quelconque des revendications 1 ou 2, dans lequel on injecte ladite matière plastique fondue en 0,6 à 3 secondes, puis on laisse refroidir pendant un temps au moins égal à 3 fois le temps d'injection, puis on démoule par déplacement relatif des outillages (10,11,20,21,22).

4. Procédé selon l'une quelconque des revendications 1 ou 2, dans lequel ledit creux (12) a, à sa partie supérieure (14) et sur au moins 5 mm de hauteur, un jeu diamétral d'au moins 0,2 mm par rapport à ladite valve ou pompe (100,1).

5. Procédé selon la revendication 4, dans lequel ledit rebord annulaire (2) de ladite valve (100) ou pompe (1) dépasse dudit bord périphérique supérieur (13) de 1 à 3 mm.

6. Procédé selon l'une quelconque des revendications 1 ou 2, dans lequel le ou les orifices d'injection (33) de la matière plastique dans ledit intervalle annulaire (23) sont coiffés pour l'injection d'un dispositif chaud d'alimentation en ladite matière plastique fondue (31 et 32).

7. Tête de distributeur (40,42) à fixer sur le corps tubulaire rigide (46,48,60,70,80) d'un boîtier, obtenable par le procédé de l'une quelconque des revendications 1 à 6, consistant en un dôme annulaire en matière plastique (24,85) moulé autour du rebord annulaire de fixation étanche (2) d'une valve (100) ou d'une pompe (1), ledit dôme monobloc (24,85) comprenant uniquement les portions suivantes en allant du haut vers le bas :
- une portion supérieure annulaire (35,36) comportant un bourrelet intérieur (35) qui enserre ledit rebord annulaire (2), en le pinçant sur au moins 0,8 mm de large par suite du moulage ;
- puis une portion en forme de voile annulaire (34) de diamètre croissant vers le bas, d'épaisseur comprise entre 1,2 et 4 mm;
- puis une portion inférieure (27;41;83 et 84) de fixation sur ledit corps de boîtier (46;48;60;70;80), prolongeant ledit voile (34) et comportant un moyen annulaire de fixation (27;37;83 et 84) sur l'extrémité supérieure (44;49;61;71;81) dudit corps tubulaire du boîtier.

8. Tête (40) selon la revendication 7, la portion supérieure (35,36) du dôme (24) comprenant, au-dessus de son bourrelet intérieur (35) de fixation dudit rebord annulaire (2), une couronne de protection longitudinale (36).

9. Tête (40;42) selon la revendication 7, dont ledit bourrelet intérieur (35) du dôme (24) enserre ledit rebord annulaire (2) sur 1 à 3 mm de large.

10. Tête (40;42) selon l'une quelconque des revendications 7 à 9, ledit moyen annulaire de fixation du dôme (24) consistant soit en une gorge annulaire (37) de profil en partie au moins semi-circulaire permettant d'emboîter le bord roulé (44) d'un corps de boîtier (46), soit en une jupe (27) ayant une surface intérieure verticale annulaire permettant d'emboîter l'extrémité rétreinte droite (49;61;71;81) d'un corps de boîtier (48;60;70).

11. Tête (40;42) selon l'une quelconque des revendications 7 à 9, dont le dôme (24) est en l'une des matières plastiques du groupe formé par: les polyamides, les polycarbonates, les polyesters, le polyacétal, le polypropylène et le polyéthylène.

12. Distributeur (90;91;92) comportant une tête (40;42) selon l'une quelconque des revendications 7 à 11 et un corps de boîtier (46;48;60;70;80), cette tête étant fixée de façon étanche par ledit moyen annulaire de fixation (27;37;83 et 84) de son dôme (24;85) à l'extrémité supérieure (44;49;61;71;81) du corps de boîtier, soit par collage, soit par soudage d'une pièce annulaire intermédiaire en matière plastique (51;52).

13. Distributeur (90;91;92) selon la revendication 12, dont le corps tubulaire (46;48;70) est en aluminium ou alliage et a un diamètre extérieur et une épaisseur satisfaisant aux correspondances suivantes:
. diamètre 33 mm à moins de 47 mm: épaisseur 0,15 à 0,20 mm
. diamètre 47 mm à moins de 55 mm :épaisseur 0,20 à 0,25 mm
. diamètre 55 mm à moins de 80 mm :épaisseur 0,25 à 0,35 mm

## Claims

1. A method for manufacturing a dispensing head (40, 42) consisting of a rigid annular dome (24) of plastics material surmounted by a valve (100) for an aerosol or a pump (1) for dispensing a liquid or creamy product, said valve (100) or said pump (1) being provided with an annular fixing shoulder (2), the circumference of which is at least externally made of plastics material, and the lower end (26) of said dome (24) has an annular means (27, 37) for fixing over the end (44, 49, 61, 71, 81) of a rigid can body (46, 48, 60, 70, 80), wherein:
a) said valve (100) or said pump (1) is placed between tools (10, 11) constituted by a central lower tool (10) and a central upper tool (11), comprising respectively a central cavity (12) surmounted by an upper peripheral rim (13) and a central cavity (18) with a peripheral bearing surface (17) located in front of the upper peripheral rim (13), said rim (13) and surface (17) sealingly gripping between them said annular rim (2) and containing said valve (100) or said pump (1) with play which restricts their heating during the moulding operation;
b) annular tools (20, 21, 22) are placed around the afore-mentioned tools (10 and 11), which annular tools define, together with the afore-mentioned tools (10, 11), an annular gap (23), which, in a downward direction, at least, comprises an inwardly widened portion (35) which closes sealingly over said annular shoulder (2) for fixing said valve (100) or pump (1), the end of the annular shoulder (2) being contained in the annular gap (23) over a radial distance of at least 0.8 mm, then a portion of increasing diameter (34) followed by at least one annular space at the lower end (26), filled by a lower annular tool (20), said annular gap (23) comprising at least one orifice for injecting plastics material (33);
c) the molten plastics material is injected through the injection orifice(s) (33) into said annular gap (23), and is allowed to cool, and the dispensing head (40, 42) obtained is removed from the mould.

2. A method according to Claim 1, wherein between 2 and 5 of said injection orifices (33) are provided, and wherein said plastics material is injected simultaneously through said orifices.

3. A method according to any one of Claims 1 or 2, wherein said molten plastics material is injected during 0.6 to 3 seconds, and is then allowed to cool for a period of time which is at least equal to 3 times the injection time, and it is then removed from the mould by relative displacement of the tools (10, 11, 20, 21, 22).

4. A method according to any one of Claims 1 or 2, wherein said cavity (12) has a diametric play of at least 0.2 mm relative to said valve or pump (100, 1), in its upper portion (14) and over a height of at least 5 mm.

5. A method according to Claim 4, wherein said annular shoulder (2) of said valve (100) or pump (1) extends from 1 to 3 mm beyond the upper peripheral rim (13).

6. A method according to any one of Claims 1 or 2, wherein the orifice(s) for injection (33) of the plastics material into said annular gap (23) are put on for injection from a hot feed device for said molten plastics material (31 and 32).

7. A dispensing head (40, 42) to be fixed to the rigid tubular body (46, 48, 60, 70, 80) of a can, which can be obtained by way of the method of any one of Claims 1 to 6, consisting of an annular dome of plastics material (24, 85) moulded around the annular shoulder (2) for sealingly fixing a valve (100) or a pump (1), said dome (24, 85) which is made of one piece comprising only the following portions in a downward direction:
- an upper annular portion (35, 36) comprising an inner enlarged portion (35) which grips said annular shoulder (2) by squeezing it over a width of at least 0.8 mm as a result of the moulding operation;
- then a portion in the form of an annular veil (34) with a downwardly increasing diameter, of a thickness of between 1.2 and 4 mm;
- then a lower portion (27; 41; 83 and 84) for fixing on said can body (46; 48; 60; 70; 80), extending said veil (34) and comprising an annular means (27; 37; 83 and 84) for fixing onto the upper end (44; 49; 61; 71; 81) of said tubular body of the can.

8. A head (40) according to Claim 7, the upper portion (35, 36) of the dome (24) comprising a longitudinal protection ring (36), above the internal enlarged portion (35) for fixing said annular shoulder (2).

9. A head (40; 42) according to Claim 7, the inner enlarged portion (35) of the dome (24) of which grips said annular shoulder (2) over a width of 1 to 3 mm.

10. A head (40; 42) according to any one of Claims 7 to 9, said annular means for fixing the dome (24) consisting either of an annular groove (37) of at least partly semi-circular profile, enabling the rolled edge (44) of a can body (46) to be inserted, or comprising a skirt (27) with an annular vertical inner surface, enabling the right-hand straight end (49; 61; 71;81) of a can body (48; 60; 70) to be inserted.

11. A head (40; 42) according to any one of Claims 7 to 9, the dome (24) of which is made of one of the plastics materials of the group formed by: polyamides, polycarbonates, polyesters, polyacetal, polypropylene and polyethylene.

12. A dispenser (90; 91; 92) comprising a head (40; 42) according to any one of Claims 7 to 11 and a can body (46; 48; 60; 70; 80), this head being fixed sealingly by said annular means (27; 37; 83 and 84) for fixing its dome (24; 85) to the upper end (44; 49; 61; 71; 81) of the can body, either by adhesion, or by welding an intermediate annular piece made of plastics material (51; 52).

13. A dispenser (90; 91; 92) according to Claim 12, the tubular body (46; 48; 70) of which is made of aluminium or alloy and has an external diameter and a thickness which satisfy the following relationships:
. diameter 33 mm to less than 47 mm: thickness 0.15 to 0.20 mm
. diameter 47 mm to less than 55 mm: thickness 0.20 to 0.25 mm
. diameter 55 mm to less than 80 mm: thickness 0.25 to 0.35 mm

## Patentansprüche

1. Verfahren zur Herstellung eines Verteilerkopfes (40, 42), der aus einer starren ringförmigen Haube (24) aus Kunststoffmaterial besteht, über der ein Aerosolventil (100) oder eine Verteilerpumpe (1) für ein flüssiges oder cremeartiges Produkt angeordnet ist, wobei das Ventil (100) oder die Pumpe (1) mit einem ringförmigen überstehenden Befestigungsrand (2) versehen ist, dessen Umfang zumindest außen aus Kunststoff besteht, wobei die Haube (24) an ihrem unteren Ende (26) ein ringförmiges Element (27, 37) zur Befestigung am Ende (44, 49, 61, 71, 81) des starren Körpers eines Behälters (46, 48, 60, 70, 80) trägt, wobei man:
a) das Ventil (100) oder die Pumpe (1) zwischen Werkzeugen (10, 11) anordnet, die aus einem unteren zentralen Werkzeug (10) und einem oberen zentralen Werkzeug (11) bestehen, die über einer zentralen Ausnehmung (12) einen oberen umlaufenden Rand (13) bzw. eine zentrale Ausnehmung (18) mit einer umlaufenden Auflagefläche (17), die sich gegenüber dem oberen umlaufenden Rand (13) befindet, aufweisen, wobei der Rand (13) und die Fläche (17) in hermetischer Weise den ringförmig überstehenden Rand (2) einschließen und das Ventil (100) oder die Pumpe (1) mit einem Spielraum, der die Erwärmung während der Formgebung begrenzt, festhalten;
b) um die o.g. Werkzeuge (10 und 11) ringförmige Werkzeuge (20, 21, 22) anordnet, die mit den o.g. Werkzeugen einen ringförmigen Zwischenraum (23) begrenzen, der von oben nach unten folgende Bestandteile aufweist: mindestens einen innen verbreiterten Bereich (35), der in hermetischer Weise den ringförmigen überstehenden Befestigungsrand (2) des Ventils (100) oder der Pumpe (1) einschließt, wobei das Ende des ringförmigen gebogenen Rands (2) im ringförmigen Zwischenraum (23) sich in einem radialen Abstand von mindestens 0,8 mm befindet, anschließend einen Bereich (34) von zunehmendem Durchmesser, gefolgt von mindestens einem ringförmigen Raum (26) am unteren Ende, der durch ein ringförmiges unteres Werkzeug (20) verschlossen ist, wobei der ringförmige Zwischenraum (23) mindestens eine Einspritzdüse (33) für Kunststoffmaterial aufweist;
c) geschmolzenes Kunststoffmaterial durch die Einspritzdüse(n) (33) in den ringförmigen Zwischenraum (23) einspritzt, es abkühlen läßt und den erhaltenen Veteilerkopf (40, 42) entformt.

2. Verfahren nach Anspruch 1, bei dem die Einspritzdüsen (33) in einer Anzahl von 2 bis 5 vorhanden sind und bei dem man das Kunststoffmaterial gleichzeitig durch diese Düsen einspritzt.

3. Verfahren nach einem der Ansprüche 1 oder 2, bei dem man das geschmolzene Kunststoffmaterial innerhalb von 0,6 bis 3 Sekunden einspritzt, es anschließend mindestens 3-mal so lang abkühlen läßt und schließlich durch relatives Verschieben der Werkzeuge (10, 11, 20, 21, 22) entformt.

4. Verfahren nach einem der Ansprüche 1 oder 2, bei dem die Ausnehmung (12) in ihrem oberen Bereich (14) und in einer Höhe von mindestens 5 mm einen diametralen Spielraum von mindestens 0,2 mm in Bezug zum Ventil oder zur Pumpe (100, 1) aufweist.

5. Verfahren nach Anspruch 4, bei dem der ringförmige überstehende Rand (2) des Ventils (100) oder der Pumpe (1) über dem oberen umlaufenden Rand (13) um 1 bis 3 mm vorsteht.

6. Verfahren nach einem der Ansprüche 1 oder 2, bei dem die Einspritzdüsen (33) für das Kunststoffmaterial im ringförmigen Zwischenraum (23) für den Einspritzvorgang mit einer heißen Vorrichtung zur Versorgung mit dem geschmolzenen Kunststoffmaterial (31 und 32) bedeckt sind.

7. Verteilerkopf (40, 42) zur Befestigung auf dem starren röhrenförmigen Körper (46, 48, 60, 70, 80) eines Behälters, erhältlich nach dem Verfahren gemäß einem der Ansprüche 1 bis 6, bestehend aus einer ringförmigen Haube aus Kunststoff (24, 85), die um den ringförmigen überstehenden Rand (2) zur hermetisch dichten Befestigung eines Ventils (100) oder einer Pumpe (1) geformt ist, wobei die einstückige Haube (24, 85) von oben nach unten nur die folgenden Bestandteile aufweist:
- einen oberen ringförmigen Bereich (35, 36) , der einen inneren Wulst (35) umfaßt, der den ringförmigen überstehenden Rand (2) einspannt, indem er ihn als Folge der Formgebung auf einer Breite von mindestens 0,8 mm festklemmt;
- anschließend einen Bereich in Form eines ringförmigen Mantels (34) mit einem nach unten zunehmenden Durchmesser, dessen Dicke zwischen 1,2 und 4 mm liegt;
- anschließend einen unteren ringförmigen Bereich (27; 41; 83 und 84) zur Befestigung am Behälterkörper (46; 48; 60; 70; 80), der eine Verlängerung des Mantels (34) darstellt, und ein ringförmiges Mittel (27; 37; 83 und 84) zur Befestigung am oberen Rand (44; 49; 61; 71; 81) des röhrenförmigen Behälterkörpers aufweist.

8. Kopf (40) nach Anspruch 7, wobei der obere Bereich (35, 36) der Haube (24) oberhalb des inneren Wulstes (35) zur Befestigung des ringförmigen überstehenden Rands (2) einen longitudinalen Schutzkranz (36) aufweist.

9. Kopf (40; 42) nach Anspruch 7, in dem der innere Wulst (35) der Haube (24) den ringförmigen überstehenden Rand (2) in einer Breite von 1 bis 3 mm festklemmt.

10. Kopf (40; 42) nach einem der Ansprüche 7 bis 9, wobei das ringförmige Mittel zur Befestigung der Haube (24) entweder aus einer ringförmigen Rille (37) mit einem zumindest teilweise halbkreisförmigen Profil, das die Aufnahme des gebogenen Rands (44) eines Behälterkörpers (46) ermöglicht oder aus einem Mantel (27) mit einer ringförmigen senkrechten Innenfläche, die die Aufnahme der geraden Einschnürung (49; 61; 71; 81) eines Behälterkörpers (48; 60; 70) ermöglicht, besteht.

11. Kopf, (40; 42) nach einem der Ansprüche 7 bis 9, dessen Haube 24 aus einem Kunststoffmaterial der folgenden Gruppe besteht: Polyamide, Polycarbonate, Polyester, Polyacetal, Polypropylen, Polyethylen.

12. Verteilervorrichtung (90; 91; 92), umfassend einen Kopf (40; 42) nach einem der Ansprüche 7 bis 11 und einen Behälterkörper (46; 48; 60; 70; 80), wobei dieser Kopf in hermetisch dichter Weise durch das Befestigungsmittel (27; 37; 83 und 84) der Haube (24; 85) am oberen Ende (44; 49; 61; 71; 81) des Behälterkörpers entweder durch Verkleben oder durch Verschweißen eines ringförmigen Zwischenstücks aus Kunststoffmaterial (51; 52) befestigt wird.

13. Verteilervorrichtung (90; 91; 92) nach Anspruch 12, wobei der röhrenförmige Körper (46; 48, 70) aus Aluminium oder aus einer Aluminiumlegierung mit einem Außendurchmesser und einer Dicke, die den folgenden Angaben entsprechen, besteht:
⌀ 33 mm bis < 47 mm : Dicke 0,15 bis 0,20 mm
⌀ 47 mm bis < 55 mm : Dicke 0,20 bis 0,25 mm
⌀ 55 mm bis < 80 mm : Dicke 0,25 bis 0,35 mm
